Europäisches Patentamt

European Patent Office

Office européen des brevets

(19)

(11) **EP 0 736 795 B1**

(12) **FASCICULE DE BREVET EUROPEEN**

(45) Date de publication et mention
de la délivrance du brevet:
**13.08.2003 Bulletin 2003/33**

(51) Int Cl.⁷: **G03B 21/10**

(21) Numéro de dépôt: **96400712.4**

(22) Date de dépôt: **02.04.1996**

(54) **Dispositif compact de rétroprojection**

Kompakte Vorrichtung für Retroprojektion

Compact rear projection device

(84) Etats contractants désignés:
**DE GB IT NL**

(30) Priorité: **07.04.1995 FR 9504177**

(43) Date de publication de la demande:
**09.10.1996 Bulletin 1996/41**

(73) Titulaire: **Thales**
**75008 Paris (FR)**

(72) Inventeurs:
• **Loiseaux, Brigitte**
**Salvador Allende 94117 Arcueil Cedex (FR)**
• **Huignard, Jean-Pierre**
**Salvador Allende 94117 Arcueil Cedex (FR)**
• **Spitz, Erich**
**Salvador Allende 94117 Arcueil Cedex (FR)**
• **Joubert, Cécile**
**Salvador Allende 94117 Arcueil Cedex (FR)**

(56) Documents cités:
**EP-A- 0 488 590**      **EP-A- 0 657 769**
**US-A- 3 711 188**

EP 0 736 795 B1

## Description

Le domaine de l'invention est celui de la visualisation qui évolue notamment vers la présentation d'images à haute résolution ayant dès dimensions de plus en plus importantes typiquement supérieure à 1m de diagonale.

Plus précisément, l'invention concerne un nouveau type de rétroprojecteur, plus compact, permettant d'envisager à court terme la réalisation d'écrans plats destinés à la visualisation d'images de grande taille.

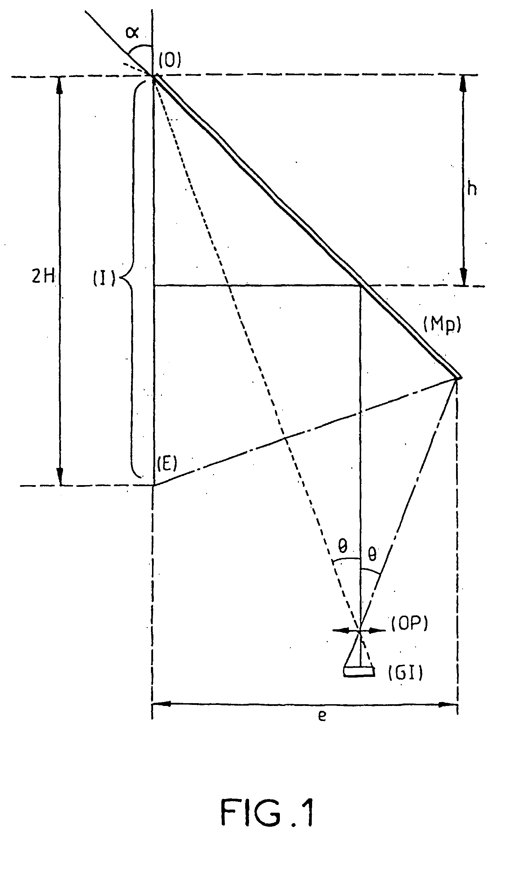

Actuellement, les dispositifs de rétroprojection présentent un écran situé entre l'observateur et le générateur d'image qu'il s'agisse d'un tube à rayon cathodique ou d'un modulateur à cristal liquide fonctionnent selon un schéma commun illustré en figure 1. L'image issue du générateur d'image (GI) via une optique de projection (OP) est renvoyée à l'aide d'un miroir principal $M_p$ vers l'écran, le miroir $M_p$ étant orienté typiquement d'un angle $\alpha$ de 45° par rapport à l'écran et permettant de réduire de moitié l'encombrement entre générateur d'image et écran par rapport à une projection frontale de l'image sur l'écran.

Pour réduire davantage la profondeur e du rétroprojecteur, l'invention propose un dispositif de rétroprojection dans lequel l'angle entre l'écran (E) et le miroir de renvoi $M_p$ peut être abaissé grâce à la présence d'un composant optique de type "mélangeur" situé à proximité du plan sur lequel l'image finale se forme. Un tel rétroprojecteur est décrit dans EP-A-488 580.

Plus précisément, l'invention a pour objet un dispositif de rétroprojection comme décrit dans la revendication 1.

Ainsi le composant optique de mélange (OM) est caractérisé par le fait qu'il est utilisé localement à la fois en transmission et en réflexion.

Les deux composants optiques (OM) et (MR) respectivement de mélange et de renvoi sont ainsi associés pour réduire l'encombrement du dispositif de rétroprojection.

De préférence, le générateur d'image (GI) est un ensemble associant un modulateur à cristal liquide et une source d'éclairage, présentant une étendue géométrique plus faible que celle issue des tubes à rayon cathodique.

Le rétroprojecteur selon l'invention peut avantageusement comprendre deux composants optiques de renvoi $(OM)_1$ et $(OM)_r$ de manière à diminuer encore plus l'encombrement du dispositif en confinant le trajet optique du flux lumineux, c'est-à-dire en lui faisant faire plusieurs "allers" et "retours". Plus précisément, ce dispositif comprend un composant $(OM)_1$ situé à proximité de l'écran (E), un composant $(OM)_r$ situé entre le composant $(OM)_1$ et un composant optique de renvoi classique (MR), le composant $(OM)_r$ étant capable de transmettre la quasi-totalité de l'image ($I_1$) et la quasi-totalité de l'image ($I_2$) créée par réflexion de l'image ($I_1$) sur le composant (MR) et le composant $(OM)_r$ étant capable de réfléchir la quasi-totalité de l'image ($I'_2$) créée par réflexion de la quasi-totalité de l'image ($I_2$) sur le composant optique de mélange $(OM)_1$, l'image ($I'_2$) étant réfléchie en l'image ($I_f$) transmise par le composant $(OM)_1$.

L'invention sera mieux comprise et d'autres avantages apparaîtront à la lecture de la description qui va suivre, donnée à titre non limitatif et grâce aux figures annexées parmi lesquelles :

- la figure 1 illustre un schéma de rétroprojection selon l'art antérieur utilisant un miroir situé à 45° de l'écran ;
- la figure 2 schématise un dispositif de rétroprojection selon l'art antérieur, dans lequel le générateur d'image (GI) est désaxé par rapport à l'optique de projection (OP);
- la figure 3 illustre un exemple de dispositif de rétroprojection selon l'invention utilisant un composant (OM) ;
- la figure 4 schématise un exemple de dispositif de rétroprojection dans lequel le composant (OM) est sélectif en polarisation ;
- la figure 5 illustre la réalisation d'une structure réseau photoinduite par l'interférence de deux ondes optiques sphériques ;
- la figure 6 illustre un exemple de dispositif de rétroprojection selon l'invention utilisant deux composants optiques de mélange $(OM)_1$ et $(OM)_r$.

La figure 1 illustre une configuration de rétroprojecteur selon l'art antérieur dans laquelle le générateur d'images (GI) crée via une optique de projection (OP) un faisceau lumineux venant se réfléchir sur le miroir de renvoi (Mp) pour former sur l'écran une image (I). Contenu de l'optique de projection utilisée conditionnant l'angle θ, l'encombrement e de ce dispositif est fourni par l'équation suivante (1) :

$$e = (h+H) \sin \alpha \cos\theta / cs(\alpha-\theta)$$

si h représente la position du rayon central du faisceau lumineux formant l'image (I), par rapport au point (O) définissant le sommet de l'écran ;
si 2H représente la hauteur de l'image (I) ;
si α représente l'angle entre l'écran (E) et le miroir (Mp).

A titre d'exemple, lorsque l'optique de projection (OP) présente une focale de 50 mm (soit une projection au grandissement d'environ 13,5), le générateur d'images a une diagonale de 7,6 cm (3"), l'écran a une diagonale de 101 cm (500 x 900 mm²) on a pour une position α = 45° avec θ = 20° et 2H = 500 mm, un encombrement e de 367 mm.

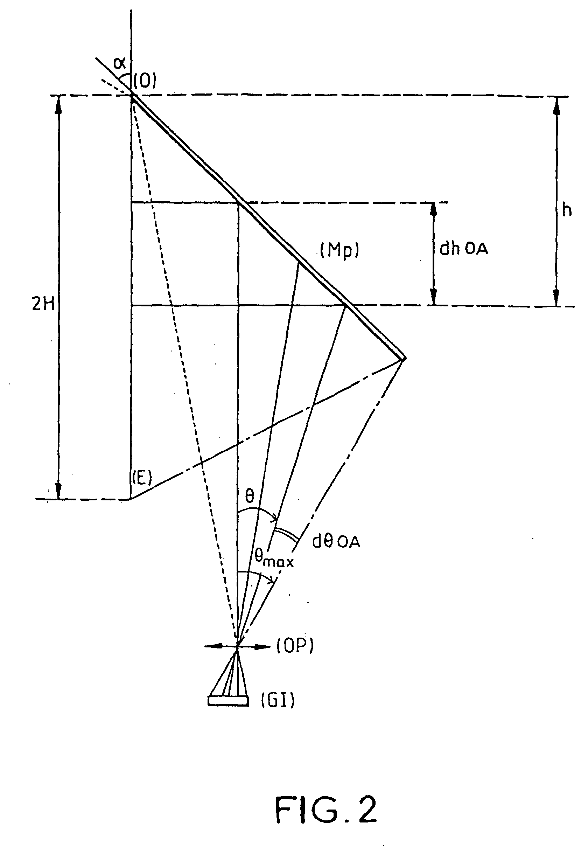

Notons qu'il est possible de réduire cet encombrement e, en envisageant un fonctionnement hors d'axe, c'est-à-dire en décentrant le générateur d'images (GI) par rapport à l'optique de projection( OP). La figure 2 illustre cette configuration dans laquelle on déporte le rayon central d'un angle $d\theta_{OA}$ et donc le centre de l'image d'une hauteur $dh_{OA}$ avec $tgd\theta_{OA} = dh_{OA}.tg\theta/H$

l'angle maximum θmax égal à $\theta+d\theta_{OA}$ permet de désaxer le système tout en confinant l'ensemble de l'image (I) sur l'écran.

Ainsi pour $\alpha$ = 45°, θ = 20°, 2H = 500 mm, $dh_{OA}$ = H/2, $d\theta_{OA}$ = 10°.

On obtient un encombrement e donné par l'équation (1) d'une valeur de 286 mm.

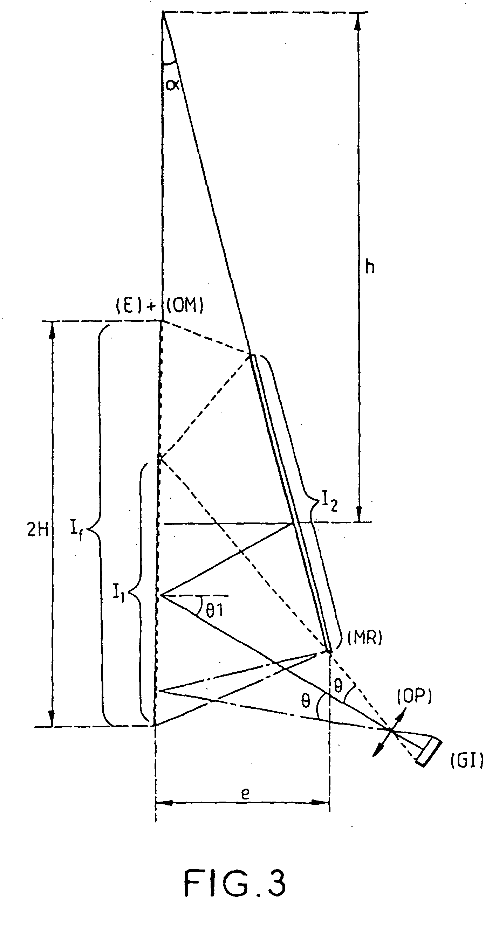

La figure 3 illustre un dispositif de rétroprojection selon l'invention rendu plus compact que les dispositifs de rétroprojection selon l'art antérieur, grâce à l'association d'au moins un miroir classique de renvoi (MR) et d'un composant optique permettant à la fois le "repli" du faisceau lumineux créé par le générateur d'image (GI) et la transmission dudit faisceau au niveau de l'écran de visualisation (E). La présence d'un tel composant de mélange permet la transmission quasi-totale de l'image, contrairement au miroir semi-réfléchissant que l'on pourrait être tenté d'utiliser pour parvenir au même confinement optique, mais qui présenterait une perte de flux lumineux environ 4 fois plus importante.

Le schéma de la figure 3 illustre le principe général du dispositif de rétroprojection selon l'invention. A partir d'un générateur d'image (GI), de préférence de type modulateur à cristal liquide (LCD) associé à une source d'éclairage, présentant une faible divergence incidente et un faible encombrement, on génère par l'intermédiaire d'une optique de projection (OP) une image virtuelle de grande taille ($I_1$) qui est une première fois réfléchie, au voisinage d'une incidence moyenne $\theta_1$ par le composant optique de mélange (OM) pour former une deuxième image virtuelle ($I_2$). Celle-ci est ensuite réfléchie par le composant de renvoi (MR) pour former l'image finale ($I_f$) sur l'écran (E), transmise par le composant (OM) au voisinage de l'incidence normale $\theta_O$.

Notons que l'optique (OP) et le générateur d'image (GI) sont de préférence rapportés dans l'encombrement e grâce à la présence d'un miroir auxiliaire de renvoi classique (non représenté sur la figure 3).

Dans le cas présent la hauteur h est définie comme suit :

$$h = H/tg2\alpha \ tg(\alpha+\theta)$$

$$et \ e = H \ sin \ \alpha cos\theta/sin \ 2\alpha.sin \ (\alpha+\theta)$$

La hauteur $h_{min}$ étant définie de manière à ce que toute l'image réfléchie par (OM) arrive sur le miroir de renvoi (MR) pour générer l'image (If).

avec $\alpha$ = 15° θ = 20° 2H = 500 mm
on obtient $h_{min} \sim$ 618 mm et un encombrement e de 212 mm.

Le composant optique de mélange (OM) peut être un miroir cholestérique sélectif en polarisation. Il peut par exemple réfléchir une lumière qui présente une polarisation de type "circulaire gauche" et transmettre sans perte une polarisation de type "circulaire droite".

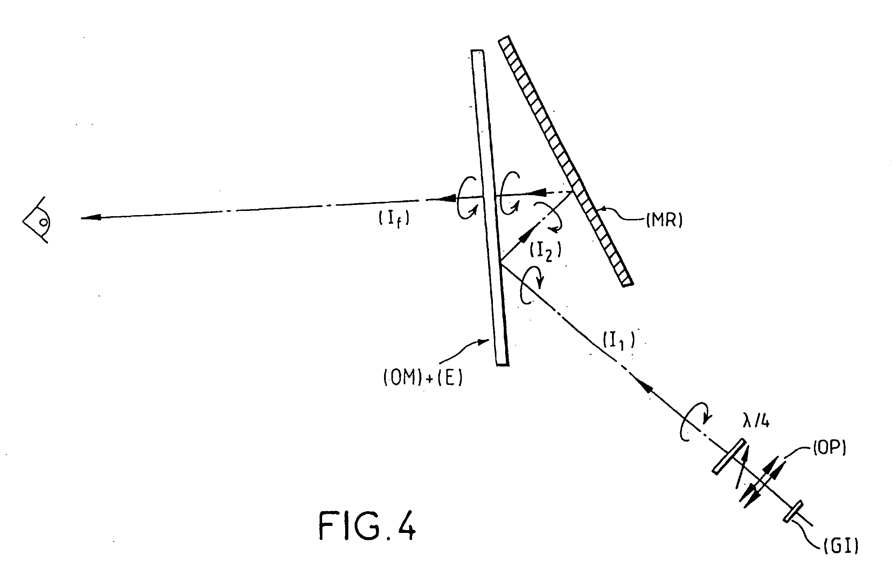

A ce titre le dispositif, illustré en figure 4 met en évidence les différents changements de polarisation de la lumière :

A partir du générateur d'image (GI) de type (LCD), on crée une lumière polarisée rectilignement, on transforme cette polarisation avec une lame quart d'onde (λ/4) en circulaire gauche. le composant cholestérique (OM) réfléchit cette lumière sans en changer la polarisation contrairement à un réflecteur classique. La lumière réfléchie polarisée "circulaire gauche" est ensuite réfléchie par le réflecteur (MR) type miroir métallique, créant par là même une lumière polarisée de type "circulaire droite" (les flèches indiquées sur le schéma sont relatives au sens dans lequel tourne la polarisation de la lumière au court de son trajet optique).

La lumière polarisée "circulaire droite" est transmise par le composant (OM) et parvient ainsi sur l'écran depuis lequel les images sont perçues par un observateur situé du côté opposé au générateur d'image (GI) par rapport à l'écran.

Plus précisément, le composant (OM) peut comprendre des films de polymères contenant du cristal liquide cholestérique, la biréfringence élevée de ce type de matériau permet d'atteindre des bandes spectrales (dans lesquelles les conditions de réflexion et de transmission requises sont satisfaites) importantes, supérieures à 80 nm.

On peut ainsi couvrir l'ensemble du domaine spectral visible soit environ 200 nm utile environ, en superposant 2 ou 3 films de ce type, chacun étant centré sur des longueurs d'onde différentes. De tels composants existent, actuellement dans des dimensions qui sont de l'ordre de 30 x 30 cm$^2$. Le centrage de leur bande spectral peut être obtenu en contrôlant la température de polymérisation du film de polymère (SID Digest 94 ; p 399-402 : "Cholesteric reflectors with a color pattern").

En effet, les cristaux liquides cholestériques s'organisent en hélice, le pas de l'hélice pouvant varier avec la température conditionne la longueur d'onde réfléchie. Il suffit ainsi de régler la température pour régler ce pas d'hélice, puis de polymériser le film pour geler l'orientation du cristal liquide dispersé dans le polymère.

Selon l'invention la fonction de mélange du composé (OM) est réalisée grâce à la présence d'un réseau de diffraction.

Le réseau diffractif est conçu pour être opérationnel selon l'angle $\theta_1$ défini en figure 3 alors que la polarisation de la lumière peut être quelconque. Dans le cas de générateur d'image (LCD), on est en présence d'une faible étendue de la source de projection, ce qui permet de réfléchir la quasi-totalité de la lumière émise même si la structure réseau possède une acceptance angulaire faible.

Lorsque la lumière a été réfléchie par le composant (OM), elle est à nouveau réfléchie par le composant de renvoi (MR) et arrive à nouveau sur le composant (OM) mais sous une incidence $\theta_O$ proche de la normale qui n'est pas dans la bande passante angulaire du composant diffractif de volume (OM).

Pour réaliser la structure réseau nécessaire, on peut utiliser des matériaux type gélatine bichromatée ou photopolymère dans lesquels on est en mesure de créer des variations d'indice pouvant être compris entre 0,05 et 0,1.

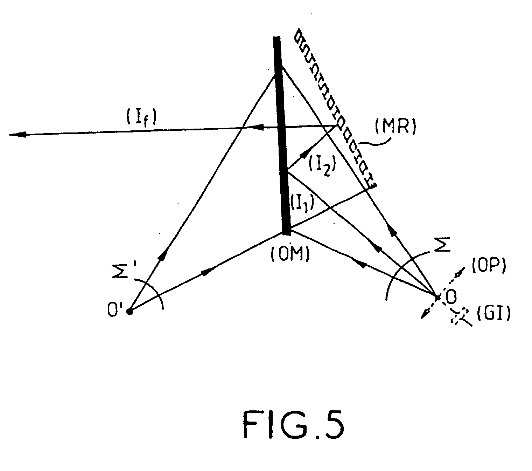

Ces variations d'indice peuvent être photoinduites à partir de 2 ondes sphériques $\Sigma$ et $\Sigma'$ comme illustrées en figure 5, dont les centres de courbures 0 et 0' sont tels que :

- (0) est situé au niveau du centre de l'objectif de projection (OP) ;
- (0') est le symétrique de (0) par rapport au composant diffractif de mélange (OM).

les strates ainsi créées sont parallèles au plan du composant et l'on obtient une fonction miroir non dispersive en longueur d'onde : elle fonctionne au voisinage d'une incidence donnée et pour une largeur spectrale qui dépend principalement de la variation d'indice photoinduite dans le matériau.

Pour réfléchir efficacement les trois couleurs primaires rouge, verte et bleue, on peut réaliser une superposition de plusieurs composants comprenant chacun, au moins une fonction miroir, centrée sur des composantes spectrales différentes. On peut également réaliser le multiplexage dans un même film de plusieurs fonctions miroirs, chacune centrées sur les composantes spectrales, Rouge, Vert, Bleu.

Dans une autre variante de l'invention, on utilise un composant optique de mélange supplémentaire $(OM_r)$ situé entre le composant $(OM)_1$ et le miroir (MR).

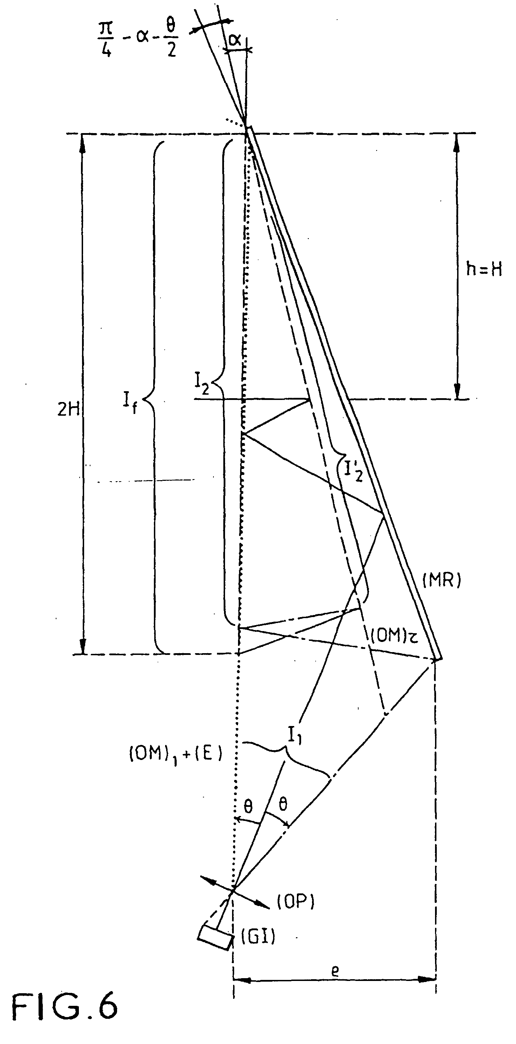

Une telle configuration est illustrée en figure 6 pour montrer la faisabilité d'un dispositif encore plus compact. Les deux composants de mélange (OM) et $(OM)_r$ possèdent des propriétés de réflexion et transmission adaptées aux incidences utilisées. Leur bande passante angulaire peut typiquement être adaptée à l'aide de la valeur de la variation d'indice photoinduite dans le cas de l'utilisation de composants diffractifs. La figure 6 illustre la formation de l'image finale $(I_f)$ sur l'écran à partir de l'image $(I_1)$ créée par le générateur d'images (GI). L'image $(I_1)$ est transmise par le composant $(OM)_r$, puis réfléchie en image $(I_2)$ par le miroir de renvoi (MR). L'image $(I_2)$ est également transmise par le composant $(OM)_r$, et réfléchie en image $(I'_2)$ par le composant $(OM)_1$, pour être réfléchie par le composant $(OM)_r$ en l'image $(I_f)$ transmise par le composant $(OM)_1$.

Par rapport au dispositif illustré en figure 3, le composant $(OM)_r$ permet de "remonter l'image" dans l'angle défini par l'écran et le miroir de renvoi (MR). Il devient possible de définir $h_{min} = H$ et l'encombrement e est dans ce cas exprimé par l'équation suivante :

$$e = H \sin(\pi/4 - \alpha + 3\theta/2) / \sin 2\theta . \sin(\pi/2 - \alpha + \theta/2).$$

On obtient dans ce cas avec $\alpha = 15°$, $\theta = 20°$, $2H = 500$ mm, un encombrement e d'environ <u>188 mm</u>.

Notons que les architectures optiques proposées utilisent préférentiellement des objectifs de projection (OP) fonctionnant sur l'axe, ce qui présente l'avantage de simplifier leur combinaison optique. Néanmoins, compte tenu de la faible étendue géométrique du faisceau d'éclairage des générateurs d'image de type (LCD), on peut aussi envisager un fonctionnement hors d'axe de quelques degrés, sans augmenter notablement la complexité de ces objectifs comme cela est validé en figure 2 dans le cas de dispositifs de rétroprojection selon l'art antérieur.

## Revendications

1. Dispositif de rétroprojection comprenant un système (GI) de génération d'image de petite taille, une optique de projection (OP) transformant l'image de petite taille en une image de grande taille $I_1$ et un écran (E) sur lequel l'image finale $(I_f)$ est formée, au moins un composant de renvoi (MR) et un composant optique de mélange (OM) à proximité de l'écran (E) **caractérisé en ce que** le composant optique de mélange (OM) est adapté de réfléchir au voisinage d'une incidence moyenne $\theta_1$ la quasi-totalité de l'image $I_1$ en un image $I_2$ et capable de transmettre au voisinage d'une incidence moyenne $\theta_O$ la quasi-totalité de l'image $I_f$ créée par réflexion de l'image $I_2$ sur le composant de renvoi (MR), ledit composant de mélange (OM) étant un composant optique diffractif dont la réflectivité est sélective en fonction de l'angle d'incidence, réfléchissant au voisinage de l'angle $\theta_1$ et transparent au voisinage de l'angle $\theta_O$.

2. Dispositif de rétroprojection selon la revendication 1, **caractérisé en ce que** le système (GI) de génération d'image est un modulateur à cristal liquide.

3. Dispositif de rétroprojection selon la revendication 1, **caractérisé en ce que** le composant de mélange (OM) possède une structure réseau dont le pas est sensiblement parallèle à l'axe optique du flux lumineux constituant l'image $(I_f)$.

4. Dispositif de rétroprojection selon la revendication 3, **caractérisé en ce que** la structure réseau est réalisée au sein d'un matériau de type photopolymère, contenant du cristal liquide cholestérique.

**5.** Dispositif de rétroprojection selon l'une des revendications 1 ou 2, **caractérisé en ce qu'**il comprend:

- deux composants optiques de mélange $(OM)_1$ et $(OM)_r$, le composant $(OM)_1$ étant situé à proximité de l'écran (E), le composant $(OM)_r$ étant situé entre le composant $(OM)_1$ et le composant optique de renvoi,
- le composant $(OM)_r$ étant capable de transmettre la quasi-totalité de l'image $I_1$ et la quasi-totalité de l'image $I_2$ créée par réflexion de l'image $I_1$ sur le composant de renvoi (MR) et le composant (OM)r étant capable de réfléchir la quasi-totalité de l'image $I'_2$ créée par réflexion de la quasi-totalité de l'image $I_2$ sur le composant optique de mélange $(OM)_1$, l'image $I'_2$ étant réfléchie en l'image $I_f$, ladite image $I_f$ étant transmise par $(OM)_1$.

**Patentansprüche**

**1.** Rückprojektionsvorrichtung, die ein System (GI) zur Erzeugung eines Bildes mit kleinen Abmessungen, eine Projektionsoptik (OP), die das Bild mit kleinen Abmessungen in ein Bild $I_1$ mit großen Abmessungen transformiert, einen Schirm (E), auf dem das endgültige Bild $(I_f)$ erzeugt wird, wenigstens eine Rückübertragungskomponente (MR) und eine optische Mischkomponente (OM), die sich in der Nähe des Schirms (E) befindet, umfaßt, **dadurch gekennzeichnet, daß** die optische Mischkomponente (OM) so beschaffen ist, daß sie in der Umgebung eines mittleren Einfallswinkels $\theta_1$ nahezu das gesamte Bild $I_1$ in ein Bild $I_2$ reflektiert und in der Umgebung eines mittleren Einfallswinkels $\theta_0$ nahezu das gesamte Bild $I_f$, das durch Reflexion des Bildes $I_2$ auf die Rückübertragungskomponente (MR) erzeugt wird, durchlassen kann, wobei die Mischkomponente (OM) eine beugende optische Komponente ist, deren Reflexionsvermögen in Abhängigkeit vom Einfallswinkel selektiv ist und die in der Umgebung des Winkels $\theta_1$ reflektierend ist und in der Umgebung des Winkels $\theta_0$ durchlässig ist.

**2.** Rückprojektionsvorrichtung nach Anspruch 1, **dadurch gekennzeichnet, daß** das Bilderzeugungssystem (GI) ein Flüssigkristallmodulator ist.

**3.** Rückprojektionsvorrichtung nach Anspruch 1, **dadurch gekennzeichnet, daß** die Mischkomponente (OM) eine Gitterstruktur besitzt, deren Schrittweite im wesentlichen zur optischen Achse des das Bild $(I_f)$ bildenden Lichtstroms parallel ist.

**4.** Rückprojektionsvorrichtung nach Anspruch 3, **dadurch gekennzeichnet, daß** die Gitterstruktur in einem Material des Photopolymer-Typs verwirklicht ist, das einen cholesterischen Flüssigkristall enthält.

**5.** Rückprojektionsvorrichtung nach einem der Ansprüche 1 oder 2, **dadurch gekennzeichnet, daß** sie umfaßt:

- zwei optische Mischkomponenten $(OM)_1$ und $(OM)_r$, wobei die Komponente $(OM)_1$ sich in der Nähe des Schirms (E) befindet und die Komponente $(OM)_r$ sich zwischen der Komponente $(OM)_1$ und der optischen Rückübertragungskomponente befindet,

- wobei die Komponente $(OM)_r$ nahezu das gesamte Bild $I_1$ und nahezu das gesamte Bild $I_2$, das durch Reflexion des Bildes $I_1$ an der Rückübertragungskomponente MR erzeugt wird, durchlassen kann und die Komponente $(OM)_r$ nahezu das gesamte Bild $I'_2$, das durch Reflexion nahezu des gesamten Bildes $I_2$ an der optischen Mischkomponente $(OM)_1$ erzeugt wird, reflektieren kann, wobei das Bild $I'_2$ in das Bild $I_f$, das durch $(OM)_1$ durchgelassen wird, reflektiert wird.

**Claims**

**1.** Backprojection device comprising a system (GI) for generating a small image, a projection optic (OP) which converts the small image into a large image $I_1$ and a screen (E) on which the final image $(I_f)$ is formed, at least one reflection component (MR) and an optical mixing component (OM) near the screen (E), **characterized in that** the optical mixing component (OM) is designed to reflect, near a mean angle of incidence $\theta_1$, almost all of the image $I_1$ as an image $I_2$ and capable of transmitting, near a mean angle of incidence $\theta_0$, almost all of the image $I_f$ created by reflection of the image $I_2$ on the reflection component (MR), the said mixing component (OM) being a diffractive optical component, the reflectivity of which is selective according to the angle of incidence, which is reflective near the angle $\theta_1$ and transparent near the angle $\theta_0$.

**2.** Backprojection device according to Claim 1, **characterized in that** the image generation system (GI) is a liquid-crystal modulator.

**3.** Backprojection device according to Claim 1, **characterized in that** the mixing component (OM) has a grating structure, the period of which is approximately parallel to the optical axis of the light flux constituting the image $(I_f)$.

**4.** Backprojection device according to Claim 3, **char-**

**acterized in that** the grating structure is produced within a material of the photopolymer type, containing cholesteric liquid crystal.

5. Backprojection device according to either of Claims 1 and 2, **characterized in that** it comprises:

- two optical mixing components $(OM)_1$ and $(OM)_r$, the component $(OM)_1$ being located near the screen (E) and the component $(OM)_r$ being located between the component $(OM)_1$ and the optical reflection component;
- the component $(OM)_r$ being capable of transmitting almost all of the image $I_1$ and almost all of the image $I_2$ created by reflection of the image $I_1$ on the reflection component (MR) and the component $(OM)_r$ being capable of reflecting almost all of the image $I'_2$ created by reflection of almost all of the image $I_2$ on the optical mixing component $(OM)_1$, the image $I'_2$ being reflected as the image $I_f$, the said image $I_f$ being transmitted by $(OM)_1$.

FIG.1

FIG.2

FIG.3

FIG.4

FIG.5

FIG.6